**Europäisches Patentamt**

**European Patent Office**

**Office européen des brevets**

(19)

(11) Veröffentlichungsnummer : **0 466 897 B1**

(12) **EUROPÄISCHE PATENTSCHRIFT**

(45) Veröffentlichungstag der Patentschrift :
04.05.94 Patentblatt 94/18

(51) Int. Cl.⁵ : **F16L 25/02**

(21) Anmeldenummer : **91903876.0**

(22) Anmeldetag : **06.02.91**

(86) Internationale Anmeldenummer :
**PCT/AT91/00022**

(87) Internationale Veröffentlichungsnummer :
**WO 91/12457 22.08.91 Gazette 91/19**

(54) **FORM- UND MATERIALSCHLÜSSIGE, INSBESONDERE ELEKTRISCH ISOLIERENDE ROHRVERBINDUNG.**

(30) Priorität : **06.02.90 AT 245/90**

(43) Veröffentlichungstag der Anmeldung :
**22.01.92 Patentblatt 92/04**

(45) Bekanntmachung des Hinweises auf die
Patenterteilung :
**04.05.94 Patentblatt 94/18**

(84) Benannte Vertragsstaaten :
**AT BE CH DE DK ES FR GB GR IT LI LU NL SE**

(56) Entgegenhaltungen :
**DE-A- 2 702 925**
**DE-A- 2 733 048**
**FR-A- 2 227 490**

(73) Patentinhaber : **COSMOGEN PATENTS
LIMITED**
**Merchant's House, Merchant's Quay**
**Dublin 8 (IE)**

(72) Erfinder : **Schwarz, Walter**
**Engerthstrasse 237b**
**A-1020 Wien (AT)**

(74) Vertreter : **Itze, Peter, Dipl.-Ing. et al**
**Patentanwälte Casati, Wilhelm, Dipl.-Ing. Itze,**
**Peter, Dipl.-Ing. Amerlingstrasse 8**
**A-1061 Wien (AT)**

## Beschreibung

Die Erfindung betrifft eine form- und materialschlüssige, insbesondere elektrisch isolierende Rohrverbindung zwischen a) einem überlappenden Rohr aus verstärktem Kunststoff, das in eine Anzahl von übereinander angeordneten, an ihren Enden jeweils mit einem gegen die Rohrachse gerichteten Flansch versehenen Rohrschalen oder Rohrschichten unterteilt ist, die vorteilhaft voneinander getrennt und damit unabhängig voneinander in Axialrichtung des Rohres verformbar sind und b) wenigstens einem, vorzugsweise zwei von den Rohrschalen bzw. -schichten überlappten, insbes. aus Metall bestehenden Rohren, wobei das Ende des überlappenden Kunststoffrohres durch Umwickeln, Umpressen oder Umgießen auf das Ende des überlappten Rohres aufgebracht ist und die Flanschen der innersten Rohrschale oder -schicht je eine am Ende des überlappten Rohres ausgebildete Schulter hintergreift und gegebenenfalls die äußerste Rohrschale oder -schicht zumindest in ihrem Endbereich von einem Überwurf-Ring umschlossen ist.

Bei Verbindungen dieser Art wurde es bekannt (DE-A-27 33 048), jedem Flansch der Rohrschale eine gesonderte Schulter an dem überlappten Rohr zuzuordnen, wobei diese Schultern treppenartig angeordnet waren, wobei die Treppung vom Rohrende ausgehend anstieg. Eine diesbezügliche ähnliche Anordnung ist auch aus der FR-A-22 27 490 bekannt. Diese Ausgestaltung bedingte eine Materialanhäufung an den Rohrenden und einen relativ langen verdickten Abschnitt ebenfalls am Ende des Rohres, was besonders bei großen Verbindungen eine erhebliche Materialanhäufung ergibt. Darüberhinaus ist auch die Herstellung der einzelnen Schultern am Rohrende arbeitsaufwendiger und komplizierter.

Der Erfindung liegt nun die Aufgabe zugrunde, unter Beibehaltung des Effektes der bekannten Verbindung (DE-A-27 33 048) hinsichtlich des gleichmäßigen und gleichzeitigen Tragens der Rohrschalen eine Vereinfachung der Ausbildung der Rohrverbindung zu erzielen. Erreicht wird dies, wenn gemäß der Erfindung die Flanschen der Rohrschalen bzw. -schichten gegeneinander abgestützt sind. Hierbei können die Flanschen unter Zwischenschaltung eines Ringes bzw. einer Ringwicklung gegeneinander abgestützt sein. Der Ring bzw. die Ringrichtung können senkrecht zur Rohrachse angeordnet werden. Es kann der Ring bzw. die Ringwicklung mit einem Fortsatz versehen sein, welcher zwischen den einander benachbarten, in axialer Richtung verlaufenden Flächen benachbarter Rohrschalen oder -schichten angeordnet ist. Der Fortsatz ist jedoch vorzugsweise an einer dieser Rohrschalen fixiert.

Durch die Abstützung der Flanschen der Rohrschalen gegeneinander reicht es selbst bei großen Dimensionen (Nennweiten über 1000 mm), nur mehr

eine Schulter an den Rohrenden vorzusehen, wodurch die Verdickung am Ende des Rohres und auch deren Erstreckung in axialer Richtung gegenüber der vorerwähnten Konstruktion gering gehalten werden können. Die Rohrschalen sind aber nur mehr im Zylinderteil gegeneinander in Axialrichtung bewegbar, wobei jedoch die Rohrschalen ebenfalls gleichzeitig und gleichmäßig bei Belastung der Rohre zum Tragen kommen, ausführungsgemäß jedoch die Anbringung der Gleitschichten erheblich erleichtert ist. Durch die erfindungsgemäße Ausgestaltung der Rohrverbindung wird daher der herstellungstechnische Aufwand vermindert und die Materialausnutzung gegenüber der vorerwähnten bekannten Kupplung verbessert. Darüberhinaus ermöglicht die erfindungsgemäße Ausbildung der Rohrverbindung für den Fall, daß das Kunststoffrohr durch Umwickeln hergestellt wird, den Winckelwinkel der äußeren Schale gegen die erzeugende Mantellinie zu verkleinern und damit die Steifigkeit der äußeren Schale zu erhöhen. Bedingt ist dieser Effekt durch die Verkleinerung der axialen Öffnung der äußeren Schale gegenüber den bekannten Konstruktionen, bei welchen die Auftreppung der Schultern einen relativ großen Außendurchmesser der äußeren Schale bedingt. Der Wickelwinkel der einer Tragschale ergibt sich hiebei nach dem Gesetz von Clairaut aus dem Verhältnis der größten und kleinsten Durchmesser der Schale zueinander aus

$$\sin \alpha = \frac{\text{Durchmesser axiale Öffnung}}{\text{Durchmesser Zylinderteil}}$$

Durch die Möglichkeit, die axiale Öffnung der äußeren Schale zu verkleinern und die damit einhergehende Verkleinerung des Wickelwinkels ergibt sich eine Erhöhung der Steifigkeit der äußeren Schale, womit eine Verdickung der äußeren Schale und das Vorsehen von Gleitebenen zwischen den Schalen, in Fällen geringerer Belastung vollständig entfallen könnte. Es ist allerdings zweckmäßig, im Zylinderteil der Schalen, zwischen den Schalen eine Gleitebene vorzusehen, um etwaige Spannungen ausgleichen zu können.

Eine besonders günstige Abstützung der Rohrschalen ergibt sich, wenn in Weiterbildung der Erfindung die der innersten Rohrschale bzw. -schichte folgende zweite Rohrschale oder -schichte mit ihrem Flansch sowohl am Flansch der innersten Rohrschale bzw. -schichte als auch an der Schulter des Rohres anliegt, an der auch der Flansch der innersten Rohrschale anliegt, wobei die Schulter bevorzugt abgetreppt ist und die vorzugsweise achsnormalen Flächen der Abtreppung die Auflageflächen des Flansches der Rohrschalen bilden. Die Abtreppung ermöglicht es, daß bei der Herstellung der Schalen durch Wickeln, die Wickelwinkel der einzelnen Schalen nach außen hin kontinierlich flacher werden können, was erwünscht ist, weil die Zugfestigkeit einer Schale umso besser wird, je mehr sich der Wickelwinkel der Axialrichtung der Schale nähert. Die Abtreppung der Schulter bildet die beste Möglichkeit einer kontinuierlichen Wicklung mit Verkleinerung des Wickelwinkels, wobei eine sprunghafte Änderung des Wickelwinkels und ein dadurch bedingter Steifigkeitssprung vermieden wird, der einen ungünstigen Einfluß auf die Festigkeit hätte.

Die Verankerung benachbarter Schalungen kann verbessert werden, wenn in Weitergestaltung der Erfindung die Innenenden der Flanschen der innersten Rohrschale bzw. -schichte von vorzugsweise in axialer Richtung verlaufenden Abwinkelungen der Flanschen der auf die innersten Schale folgenden zweiten Schale umschlossen sind. Bei dieser Ausgestaltung wird der Flansch der innersten Schale durch den Flansch der folgenden Schale geschützt. Eine festigkeitsmäßig günstige Ausbildung des Flansches der innersten Rohrschale ergibt sich, wenn in besonderer Ausgestaltung der Erfindung die Außenfläche des Flansches der innersten Rohrschale bzw. -schicht einen stumpfen Winkel mit der vorzugsweise koaxial zur Rohrachse verlaufenden Mantelfläche der Rohrschale bzw. -schicht einschließt.

In weiterer Ausgestaltung der Erfindung kann vorgesehen sein, daß die Auflagefläche des Flansches der innersten Rohrschale bzw. -schicht an der Schulter gegen die Rohrachse unter einem spitzen Winkel geneigt ist- und die Schulter des überlappten Rohres eine korrespondierende Hinterschneidung aufweist. Diese Ausgestaltung der erfindungsgemäßen Verbindung ergibt eine besonders günstige Verankerung der Rohrschalen am überlappten Rohr.

Eine weitere Ausführungsform sieht vor, daß in die Flanschen der Rohrschalen Verstärkungseinlagen, insbes. von L-förmigen Querschnitt aufweisenden Ringen, eingebettet sind, die aus einem Material erhöhter Festigkeit gegenüber dem Material der Schalen, insbes. aus Stahl oder Metallfeindrähten bzw. Hochmodulfasern und Gelege wie Bor-Kohlenstoff und Whiskersfasern bestehen. Diese Ausgestaltung dient der Versteifung und ermöglicht eine einwandfreie Beherrschung der in den Endteilen erhöht auftretenden Probleme der Krafteinleitung und -überleitung.

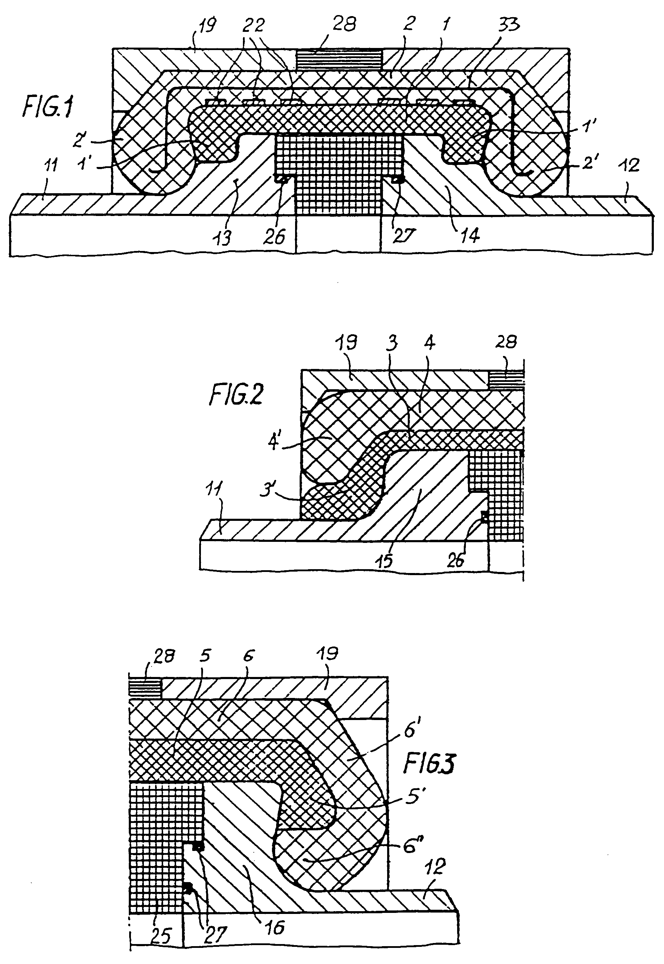

Die Erfindung wird nachstrehend anhand der Zeichnung näher erläutert. Die Fig. 1 - 5 zeigen hiebei jeweils im Längsschnitt verschiedene Ausführungsformen von erfindungsgemäß ausgebildeten form- und materialschlüssigen Verbindungen.

Für die Verbindung ist hiebei ein überlappendes Rohr aus verstärktem Kunststoff vorgesehen, das in eine Anzahl von übereinander angeordneten, an ihren Enden jeweils mit einem gegen die Rohrachse gerichteten Flansch 1'-1O' versehenen Rohrschalen 1 - 10 oder Rohrschichten unterteilt ist. Die Rohrschalen oder -schichten 1 - 10 sind vollkommen voneinander getrennt und können in diesem Fall unabhängig voneinander in Axialrichtung des Rohres sich verformen, z.B. wenn die form- und materialschlüssige Verbindung unter Zugbeanspruchung eingesetzt wird. Die Rohrschalen 1 - 10 oder Rohrschichten überlappen wenigstens eines, in den dargestellten Ausführungsbeispielen, jedoch jeweils zwei insbesondere aus Metall bestehende Rohre 11, 12. Das Ende des Kunststoffrohres kann durch Umwickeln, Umpressen oder Umgießen auf das Ende des überlappten Rohres 11, 12 aufgebracht werden. Die Flanschen der innersten Rohrschalen 1,3,5, 7 und 9 hintergreifen je eine am Ende des überlappten Rohres 11 bzw. 12 ausgebildete Schulter 13-18. Die äußerste Rohrschale 2,4,6,8, 10 ist zumindest in ihrem Endbereich von einem Überwurfring 19 umschlossen.

Bei den dargestellten Ausführungsbeispielen gemäß den Fig. 1 - 5 sind die Flanschen 1' - 10' der Rohrschalen 1 - 10 bzw. Rohrschichten gegeneinander abgestützt. Bei dieser Ausführungsform nach den Fig. 4 und 5 ist zwischen den Flanschen 7', 8' bzw. 9', 10' der einander benachbarten Rohrschalen 7, 8 bzw. 9,10 ein im wesentlichen senkrecht zur Rohrachse angeordneter Ring 2O bzw. eine Ringwicklung aus Metallfeindrähten bestehend, angeordnet. Der Ring 2O kann hiebei mit einem Fortsatz 21 versehen sein, der zwischen den einander benachbarten, in axialer Richtung verlaufenden Flächen benachbarter Rohrschalen 7, 8 bzw. 9, 10 angeordnet ist, vorzugsweise jedoch nur an einer dieser Rohrschalen 7 bzw. 8, 9 bzw. 1O fixiert ist, um eine etwaige unter Belastung auftretende axiale Verschiebung der Rohrschalen 7, 8 bzw. 9,10 gegeneinander nicht zu behindern.

Bei der Ausführungsform gemäß Fig. 1 liegt die der innersten Rohrschale 1 folgende zweite Rohrschale 2 mit ihrem Flansch 2 der sowohl am Flansch 1' der innersten Rohrschale als auch an der Schulter 13, 14 des überlappten Rohres 11, 12 an, an der auch der Flansch 1' der innersten Rohrschale anliegt. Die Schulter 13, 14 ist hiebei abgetreppt und die im wesentlichen achsnormalen Flächen der Abtreppung bilden die Auflageflächen für die Flanschen 1', 2' beider Rohrschalen 1, 2. Die Abtreppung erfolgt hiebei gegen das Ende des Rohres ansteigend, was eine besonders günstige Ausnützung des für die Bildung der Schulter am Ende des Rohres 11 bzw. 12 vorzusehenden Materials ergibt. Die beiden Rohre 11 und 12 sind in axialer Richtung durch einen im wesentlichen T-Querschnitt aufweisenden Ring 25 aus isolierendem glasfaserverstärktem Kunststoff getrennt. Zur Abdichtung zwischen dem Distanzring 25 und den Rohren 11, 12 können O-Ringe 26, 27 vorgesehen sein. Analoge Konstruktionen der Distanzringe 25 und Anordnungen der O-Ringe 26, 27 zeigen auch die Ausführungsvarianten gemäß den Fig. 2 - 5, wobei in den geradlinigen Fig. jeweils eine linke Hälfte einer Rohrkupplung und in den ungeradzahligen jeweils die rechte Hälfte einer Rohrverbindung dargestellt ist.

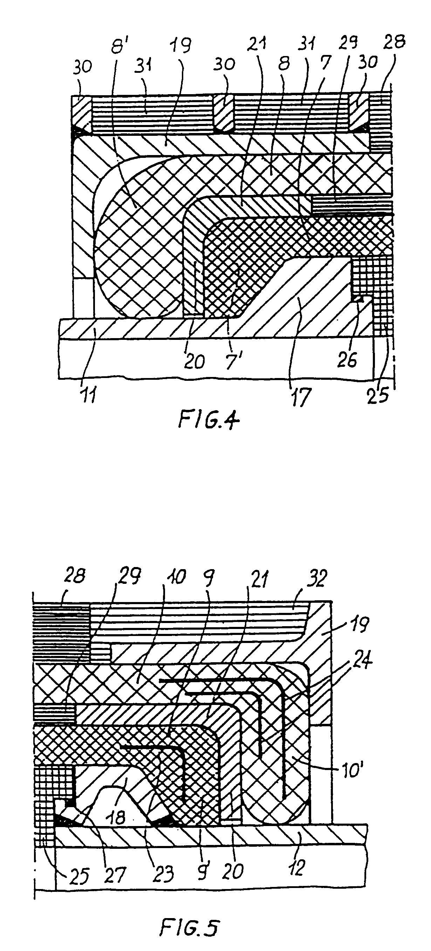

Bei den in den Fig. 2 und 3 dargestellten Ausführungsvarianten schließt die Außenfläche des Flansches 3', 5' der innersten Rohrschale 3, 5 einen stumpfen Winkel mit der im wesentlichen koaxial zur Rohrachse verlaufenden Mantelfläche der Rohrschale 3, 5 ein.

Eine besonders günstige gegenseitige Verklammerung der benachbarten Rohrschalen 5, 6 an ihren Enden läßt die Fig. 3 der Zeichnung erkennen. Hiebei sind die inneren Enden der Flanschen 5' der innersten Rohrschale 5 von im wesentlichen in axialer Richtung verlaufenden Abwinkelungen 6'' der Flanschen 6' der auf die innersten Schale 5 folgenden zweiten Schale 6 umschlossen. Hiebei ist die Auflagefläche des Flansches 5' der innersten Rohrschale 5 an der Schulter 16 gegen die Rohrachse unter einem spitzen Winkel geneigt. Die Schulter des überlappten Rohres 12 weist hiebei eine korrespondierende Hinterschneidung auf.

Zur Erzielung einer wesentlichen Annäherung können, wie dies in Fig. 1 dargestellt ist, auf die Mantelfläche der innersten Rohrschale 1 vor allem im Bereich von deren beiden Enden Ringe 22 aufgelegt werden, die aus einem Material von gegenüber dem Material der Rohrschale 1 bzw. 2 erhöhter Festigkeit bestehen, insbesondere aus Stahl oder einem anderen Metall oder auch aus Metallfeindrähten. Zum Zwekke der Armierung können jedoch auch alternativ oder zusätzlich in die Flanschen 9', 10' der Rohrschalen 9, 10 Verstärkungseinlagen, insbesondere in Form von L-Querschnitt aufweisenden Ringen 23, 24 eingebettet werden, die aus einem Material von gegenüber dem Material der Schalen erhöhter Festigkeit, insbesondere aus Stahl- oder Metallfeindrähten bestehen. Diese Verstärkungseinlagen tragen dazu bei, den Schalen im Bereich der Flanschen, wo die Beanspruchung am ungünstigsten ist (dreidimensionaler Spannungszustand), verbesserte Festigkeitseigenschaften zu geben.

Weitere Ausführungsbeispiele gemäß den Fig. 1 - 4 sind die Schultern 13, 14, 15, 16, 17, jeweils aus einem Stück mit dem Rohr 11 bzs. 12 gefertigt. Bei Verbindungen großen Durchmessers ist es jedoch günstig, wenn die Schulter für die Abstützung der Rohrschalen 9 etwa auf einem vorgefertigten wulstartigen Rinr 18 ausgebildet ist, der mit dem Rohr 12 am Ende durch Schweißen, Kleben od.dgl. Verbindung unlösbar verbunden ist.

Selbstverständlich kann die Schulter auch als Schweißkonstruktion aus mehreren ringförmigen Teilen gebildet werden. Der Raum zwischen den beiden, jeweils auf die Enden der äußeren Schale 2,4,6,8,10 aufgeschobenen Ringe 19 kann durch Radialwicklungen 28 überbrückt sein. Radialwicklungen 29 können auch zwischen den Fortsätzen 21 der Scheiben 20 angeordnet sein, wie dies etwa die Fig. 4 und 5 zeigen. Der Überwurfring 19 kann an seinem Umfang mit axial voneinander beabstandeten Ringen 30 versehen sein, wobei der Zwischenraum zwischen diesen Ringen ebenfalls durch Radialwicklungen 31 ausgefüllt sein kann.

Im Falle des Ausführungsbeispieles gemäß Fig. 5 besitzt der Überwurfring 19 T-Querschnitt und liegt mit dem Steg außen an der äußeren Schale 10 an. Der Raum zwischen der Außenfläche des Steges und dem Ende des T-Flansches kann mit einer Radialwicklung 32 ausgefüllt sein.

Die äußere Rohrschale 2 kann, wie dies Fig. 1 zeigt, mit mehreren durchlaufenden Zwischengelegen bzw. Geweben 33 von Hochmodulfasern, beispielsweise aus Bor-Kohlenstoff oder Whiskers, versteift sein.

## Patentansprüche

1. Form- und materialschlüssige, insbesondere elektrisch isolierende Rohrverbindung zwischen a) einem überlappenden Rohr aus verstärktem Kunststoff, das in eine Anzahl von übereinander angeordneten, an ihren Enden jeweils mit einem gegen die Rohrachse gerichteten Flansch versehenen Rohrschalen oder Rohrschichten unterteilt ist, die vorteilhaft voneinander getrennt und damit unabhängig voneinander in Axialrichtung des Rohres verformbar sind und b) wenigstens einem, vorzugsweise zwei von den Rohrschalen bzw. -schichten überlappten, insbes. aus Metall bestehenden Rohren, wobei das Ende des überlappenden Kunststoffrohres durch Umwickeln, Umpressen oder Umgießen auf das Ende des überlappten Rohres aufgebracht ist und die Flanschen der innersten Rohrschale oder -schichte je eine am Ende des überlappten Rohres ausgebildete Schulter hintergreift und gegebenenfalls die äußerste Rohrschale oder -schichte zumindest in ihrem Endbereich von einem Überwurf-Ring umschlossen ist, dadurch gekennzeichnet, daß die Flanschen (1'-10') der Rohrschalen (1-10) bzw. -schichten gegeneinander abgestützt sind.

2. Verbindung nach Anspruch 1, dadurch gekennzeichnet, daß die Flanschen (7', 8' bzw. 9', 10') unter Zwischenschaltung eines Ringes (20) bzw. einer Ringwicklung gegeneinander abgestützt sind.

3. Verbindung nach Anspruch 2, dadurch gekennzeichnet, daß der Ring (20) bzw. die Ringwicklung senkrecht zur Rohrachse angeordnet ist.

4. Verbindung nach Anspruch 2 oder 3, dadurch gekennzeichnet, daß der Ring (20) bzw. die Ringwicklung mit einem Fortsatz (21) versehen ist, welcher zwischen den einander benachbarten in axialer Richtung verlaufenden Flächen benachbarter Rohrschalen (7, 8; 9; 10) oder -schichten angeordnet ist.

5. Verbindung nach Anspruch 4, dadurch gekennzeichnet, daß der Fortsatz (21) nur an einer der Rohrschalen (7; 8; 9; 10) fixiert ist.

6. Verbindung nach Anspruch 1, dadurch gekennzeichnet, daß die der innersten Rohrschale (1) bzw.-schichte folgende zweite Rohrschale (2) oder -schichte mit ihrem Flansch (2') sowohl am Flansch (1') der innersten Rohrschale (1) bzw. -schichte als auch an der Schulter (13,14) des Rohres (11,12) anliegt, an der auch der Flansch (1') der innersten Rohrschale (1) anliegt, wobei die Schulter (13,14) bevorzugt abgetreppt ist und die vorzugsweise achsnormalen Flächen der Abtreppung die Auflageflächen des Flansches der Rohrschalen bilden.

7. Verbindung nach einem der Ansprüche 1 bis 6, dadurch gekennzeichnet, daß die Innenenden der Flanschen (5') der innersten Rohrschale (5) bzw. -schichte von vorzugsweise in axialer Richtung verlaufenden Abwinkelungen (6") der Flanschen (6') der auf die innerste Schale (5) folgenden zweiten Schale (6) umschlossen sind.

8. Verbindung nach Anspruch 7, dadurch gekennzeichnet, daß die Außenfläche des Flansches (3',5') der innersten Rohrschale (3;5) bzw. -schichte einen stumpfen Winkel mit der vorzugsweise koaxial zur Rohrachse verlaufenden Mantelfläche der Rohrschale (3;5) bzw. -schicht einschließt.

9. Verbindung nach einem der Ansprüche 1 bis 8, dadurch gekennzeichnet, daß die Auflagefläche des Flansches (5') der innersten Rohrschale (5) oder -schicht an der Schulter (16) gegen die Rohrachse unter einem spitzen Winkel geneigt ist und die Schulter (16) des überlappten Rohres (12) eine korrespondierende Hinterschneidung aufweist.

10. Verbindung nach einem der Ansprüche 1 bis 9, dadurch gekennzeichnet, daß auf die Mantelfläche der innersten Rohrschale (1), insbes. im Bereich von deren beiden Enden Ringe (22) aufgelegt sind, die aus einem Material erhöhter Festigkeit gegenüber dem Material der Rohrschale (1;2), insbesondere aus Stahl oder aus zu Ringen gewickelten Metallfeindrähten, bestehen.

11. Verbindung nach einem der Ansprüche 1 bis 10, dadurch gekennzeichnet, daß in den Flanschen (9',10') der Rohrschalen (9,10) Verstärkungseinlagen, insbes. von L-förmigen Querschnitt aufweisenden Ringen (23,24) eingebettet sind, die aus einem Material erhöhter Festigkeit gegenüber dem Material der Schalen (9,10), insbesondere aus Stahl oder Metallfeindrähten, bestehen.

12. Verbindung nach einem der Ansprüche 1 bis 11, dadurch gekennzeichnet, daß die Schulter am Ende des überlappten Rohres auf einer mit dem Rohr durch Schweißen, Kleben od.dgl. verbundenen Schweißkonstruktion ausgebildet ist bzw. daß die Schulter (18) auf einem wulstartigen vorgefertigten Ring ausgebildet ist, der mit dem Rohr (12) unlösbar, insbesondere durch Schweißen, verbunden ist.

13. Verbindung nach einem der Ansprüche 1- 12, dadurch gekennzeichnet, daß die äußere Rohrschale (2) mit mehreren durchlaufenden Zwischengelegen bzw. Geweben (33) von Hochmodulfasern aus beispielsweise Bor-Kohlenstoff oder Whiskers versteift wird.

**Claims**

1. A pipe connection, in particular an electrically insulating pipe connection, formed by interlocking or inter-penetration of material and used between a) an overlapping pipe of reinforced synthetic plastics material which is sub-divided into a number of superposed pipe shells or layers of piping each provided at the ends with a flange directed towards the pipe axis and adapted to be workable in the axial direction of the pipe, ideally separately and thus independently of one another, and b) at least one and preferably two pipes consisting particularly of metal and overlapped by the pipe shells or layers of piping, the end of the overlapping synthetic plastics pipe being applied to the end of the overlapped pipe by being wrapped, pressed or moulded around, a shoulder constructed at the end of the overlapped pipe engaging behind the flanges on the inner-most pipe shell or layer, a cap ring possibly enclosing at least the end portion of the outermost pipe shell or layer, characterised in that the flanges (1' to 10') of the pipe shells (1 to 10) or layers are braced in respect of one another.

2. A connection according to claim 1, characterised in that the flanges (7', 8' and 9', 10') are braced in respect of one another through an interposed ring (20) or annular winding.

3. A connection according to claim 2, characterised in that the ring (20) or annular winding is disposed at right-angles to the pipe axis.

4. A connection according to claim 2 or 3, characterised in that the ring (20) or the annular winding is provided with an extension (21) which is disposed between the mutually adjacent axially extending surfaces of adjacent pipe shells (7, 8; 9, 10) or layers.

5. A connection according to claim 4, characterised in that the extension piece (21) is fixed on only one of the pipe shells (7, 8, 9, 10).

6. A connection according to claim 1, characterised in that the second pipe shell (2) or layer following the innermost pipe shell (1) or layer has its flange (2') bearing both on the flange (1') of the innermost pipe shell (1) or layer and also on the shoulder (13, 14) of the pipe (11, 12) on which also the flange (1') of the innermost pipe shell (1) bears, the shoulder (13, 14) preferably being stepped and the preferably axially perpendicular surfaces of the stepping forming the supporting surfaces of the flange on the pipe shells.

7. A connection according to one of claims 1 to 6, characterised in that the inner ends of the flanges (5') of the innermost pipe shell (5) or layer are enclosed by preferably axially extending angled-over portions (6") of the flange (6') of the second shell (6) following the innermost shell (5).

8. A connection according to claim 7, characterised in that the outer surface of the flange (3', 5') of the innermost pipe shell (3; 5) or layer encloses an obtuse angle with the generated surface of the pipe shell (3; 5) or layer which extends preferably coaxially with the pipe axis.

9. A connection according to one of claims 1 to 8, characterised in that the supporting surface of the flange (5') of the innermost pipe shell (5) or layer is at the shoulder (16) inclined at an acute angle to the pipe axis, the shoulder (16) of the overlapped pipe (12) having a corresponding under cut.

10. A connection according to one of claims 1 to 9, characterised in that placed on the generated surface of the innermost pipe shell (1), particularly in the region of its two ends, are rings (22) which consist of a material of greater strength than the material of the pipe shell (1; 2) and consist in particular of steel or of fine metal wires wound into rings.

11. A connection according to one of claims 1 to 10, characterised in that embedded in the flanges (9', 10') of the pipe shells (9, 10) are reinforcing inlays, particularly rings (23, 24) of L-shaped cross-section which consist of a material of greater strength than the material of the shells (9, 10), particularly steel or fine metal wires.

12. A connection according to one of claims 1 to 11, characterised in that the shoulder at the end of the overlapped pipe is constructed on a welded construction connected to the pipe by welding, adhesion or the like and/or in that the shoulder (18) is constructed on a bead-like prefabricated ring which is inseparably connected to the pipe (12), particularly by welding.

13. A connection according to one of claims 1 to 12, characterised in that the outer pipe shell (2) is reinforced by a plurality of continuous intermediate fillings or fabrics (33) woven from high-modulus fibres of for example boron-carbon or whiskers.

## Revendications

1. Raccord de tubes isolant, notamment électriquement, à liaison de forme et de matière entre a) un tube recouvrant en plastique renforcé qui est divisé en une série de coques ou couches tubulaires munies à leurs extrémités d'une bride orientée contre l'axe tubulaire et superposées, lesquelles sont avantageusement séparées les unes des autres et sont ainsi déformables indépendamment les unes des autres dans la direction axiale du tube et b) au moins un, préférentiellement deux tubes, notamment en métal, recouverts par les coques ou couches tubulaires, moyennant quoi l'extrémité du tube en plastique recouvrant est située, par enveloppement, enrobage ou cerclage, sur l'extrémité du tube recouvrant et un épaulement formé à l'extrémité du tube recouvrant agrippe les brides de la coque ou couche tubulaire interne et/ou la coque ou couche la plus éloignée du centre est entourée, au moins dans sa zone d'extrémité, par une bague de clavette, caractérisé en ce que les brides (1', 10') des coques ou couches (1, 10) sont appuyées les unes contre les autres.

2. Raccord selon la revendication 1, caractérisé en ce que les brides (7', 8' et/ou 9', 10') sont appuyées les unes contre les autres par insertion d'une bague (20) et/ou d'un enroulement à anneau.

3. Raccord selon la revendication 2, caractérisé en ce que la bague (20) et/ou l'enroulement à anneau est disposé perpendiculairement par rapport à l'axe tubulaire.

4. Raccord selon la revendication 2 ou 3, caractérisé en ce que la bague (20) et/ou l'enroulement à anneau est munie d'un prolongement (21), lequel est disposé entre les surfaces (7, 8, 9, 10) adjacentes, orientées axialement de manière adjacente les unes par rapport aux autres.

5. Raccord selon la revendication 4, caractérisé en ce que le prolongement (21) n'est fixé qu'à l'une des coques tubulaires (7, 8, 9, 10).

6. Raccord selon la revendication 1, caractérisé en ce que la seconde coque (2) ou couche tubulaire suivante de la coque (1) et/ou couche tubulaire interne est située avec sa bride (2') aussi bien contre la bride (1') de la coque ou couche tubulaire (1) interne que contre l'épaulement (13, 14) du tube (11, 12) et contre la bride (1') de la coque tubulaire (1) interne, moyennant quoi l'épaulement (13, 14) est creusé préférentiellement en dedans et les surfaces du bout en escalier, orientées préférentiellement normalement par rapport à l'axe, constituent les surfaces portantes de la bride des coques tubulaires.

7. Raccord selon l'une des revendications 1 à 6, caractérisé en ce que les extrémités internes des brides (5') de la coque ou couche tubulaire (5) interne sont entourées de pliages en U (6''), orientés préférentiellement axialement, des brides (6') de la seconde coque (6) suivante sur la coque interne (5).

8. Raccord selon la revendication 7, caractérisé en ce que les surfaces externes de la bride (3', 5') de la coque et/ou couche tubulaire (3, 5) interne comprennent un angle obtus avec la surface latérale, disposée préférentiellement coaxialement par rapport à l'axe tubulaire, de la coque et/ou couche tubulaire (3, 5).

9. Raccord selon l'une des revendications 1 à 8, caractérisé en ce que la surface portante de la bride (5') de la coque (5) ou couche tubulaire interne est inclinée vers l'épaulement (16), contre l'axe tubulaire sous un angle au sommet et en ce que l'épaulement (16) du tube recouvrant (12) présente une contre-dépouille correspondante.

10. Raccord selon l'une des revendications 1 à 9, caractérisé en, ce que des bagues (22) sont placées sur la surface latérale de la coque tubulaire (1) interne, notamment dans la zone des deux extrémités de celle-ci, lesquelles bagues se composent d'un matériau d'une résistance accrue par rapport au matériau de la coque tubulaire (1, 2), notamment d'acier ou de fil métallique enroulé aux bagues.

11. Raccord selon l'une des revendications 1 à 10, caractérisé en ce que des éléments de renforcement, notamment des bagues présentant une section en forme de L (23, 24), sont insérées dans les brides (9', 10') des couches tubulaires (9, 10), qui se composent d'un matériau d'une résistance accrue par rapport au matériau des coques (9, 10), notamment en acier ou en fil métallique.

12. Raccord selon l'une des revendications 1 à 11, caractérisé en ce que l'épaulement à l'extrémité du tube recouvrant est formé sur une construction soudée reliée au tube par soudure, collage ou similaire, et/ou en ce que l'épaulement (18) est formé sur une bague préformée en renflement à bourrelet, qui est juxtaposée de façon inamovible au tube (12), notamment par soudure.

13. Raccord selon l'une des revendications 1 à 12, caractérisé en ce que la coque (2) extérieure est maintenue par plusieurs interpositions et/ou tissus (33) continus, de fils continus retordus à haut module en carbone-bore ou en barbes par exemple.

FIG.1

FIG.2

FIG.3

FIG.4

FIG.5